# EUROPEAN PATENT SPECIFICATION

(11) **EP 1 372 954 B1**
(45) Date of publication and mention of the grant of the patent: **12.07.2006**
(21) Application number: 02706102.7
(22) Date of filing: 01.02.2002
(51) Int. Cl.: B32B 27/00, C09J 7/00, C09J 7/02, C09J 7/04, C09J 133/08

(54) **IMPROVED TRANSPARENT ADHESIVE SHEET**
VERBESSERTES TRANSPARENTES FLÄCHENFÖRMIGES KLEBEGEBILDE
FEUILLE ADHESIVE TRANSPARENTE AMELIOREE

(30) Priority: 02.02.2001 JP 2001026863
(43) Date of publication of application: 02.01.2004
(73) Proprietor: 3M Innovative Properties Company, St. Paul, MN 55133-3427 (US)
(72) Inventor: OKUYAMA, Takahide, Yamagata, Yamagata 990-2221 (JP)
(74) Representative: Vossius & Partner
(86) International application number: PCT/US2002/002900
(87) International publication number: WO 2002/062570

(56) References cited:
- WO-A-01/18139
- WO-A-01/76867
- WO-A-01/83633
- US-A- 5 861 211

## Description

The present invention relates to a transparent adhesive sheet and, in particular, an improved adhesive sheet that is suitable to protect images formed by image-forming means, such as printing.

Conventionally, there are more and more instances where images or graphics are created on recording media with adhesive layers using printing means such as electrostatic printing or ink jet printing. Such printed media are widely used as signs for advertisement or guidance. Such printed media can be attached to building walls and building floors via adhesive layers provided on the media. The images are usually protected from damage and soiling by laminating a transparent protective film on the image-created surface (attachment surface) of the image-formed medium.

From the standpoint of operability, such transparent protective films generally must be easily applied so as to cover the image after creation of the image on the medium. For ease of application, transparent protective films usually have adhesive layers.

The image on the recording medium must be visible through the transparent protective film, necessitating a high transparency of the protective film. Currently available protective films typically have an additional layer containing an inorganic filler that might impair the transparency.

In recent years, however, image-formed media are being applied to walls and floors of buildings. Currently available protective films are subjected to frictional contact with cleaning apparatuses and foot traffic, as well as to relative large abrasive forces (forces that cause abrasion) such as the impact force of wind and rain. As a result, conventional transparent protective films have been inadequate to protect images from abrasive damage caused by such abrasive forces.

Sheet products employing protective layers comprising such rigid beads and cured resins for image protection are disclosed in Japanese Unexamined Patent Publication (Kokai) No. 11-10823, Japanese Unexamined Patent Publication (Kokai) No. 11-115141 and Japanese Unexamined Patent Publication (Kokai) No. 11-129428. For example, Japanese Unexamined Patent Publication (Kokai) No. 11-10823 discloses a cosmetic sheet as the protective layer consisting of (A) inorganic beads with a mean particle size of 3-50 µm and (B) a reactive resin, wherein the content of (A) is 5-50 wt% of the total of (A) + (B). The cosmetic sheet is a sheet that contains a printed image that is visible through the protective layer of the sheet.

It is disclosed in the aforementioned publications that the inorganic beads in the protective layer may be, for example, rigid beads of relatively high hardness, which are composed mainly of alumina. According to a cosmetic sheet with such a coating layer, abrasion resistance of the protective layer is effectively improved.

There is no disclosure in the aforementioned publications of a protective layer-attached adhesive sheet provided with an adhesive layer containing a self-adherent polymer, which is attached onto an image-formed medium. It is therefore unable to attach a protective layer-attached adhesive sheet onto an image-formed medium in locations where no coating equipment is available, and this has constituted an undesirable drawback in terms of operability.

It has become clear that further improvement is necessary beyond the aforementioned improvement (provision of a specific protective layer) for adhesive sheets used for surface protection of image-formed media that are employed by attachment to building walls and floors. The further improvement that is required is prevention of image coloration due to coloration (yellowing) of the adhesive layer. Specifically, it has been found that when using an adhesive layer comprising a crosslinked adhesive polymer through a combination of an ordinary self-adherent polymer and an crosslinking agent, the adhesive layer undergoes coloration when used outdoors for relatively long periods, thus causing coloration of the image visible through the adhesive sheet.

Even with conventional types of transparent protective films with no protective layer, excessive coloration of the adhesive layer results in a visibly colored image on the image-formed medium on which the protective film has been attached. Nevertheless, such excessive coloration does not occur under normal use conditions, so that clearly visible coloration of the image on the attachment surface is almost never produced. On the other hand, use under such conditions in which excessive coloration of the adhesive layer does not occur is also possible in the case of the aforementioned adhesive sheets with protective layers. Still, when an adhesive sheet with a rigid bead protective layer is used as a protective film, a unique problem has occurred in that the image sometimes undergoes visible coloration even with relatively mild coloration of the adhesive layer, when a rigid bead protective layer is present.

According to the present invention, there is provided a transparent adhesive sheet for protection of adherends with images, the adhesive sheet comprising a base layer, a protective layer disposed on the front surface of the base layer and an adhesive layer disposed on the back surface of the base layer, wherein the protective layer comprises, at least as its top layer, a layer containing a cured resin and rigid beads dispersed in the cured resin, and the adhesive layer contains a self-adherent polymer crosslinked with a non-yellowing crosslinking agent.

This type of adhesive sheet can be readily attached for protection of images on the media from abrasive wear, and prevents coloration of the visible images therethrough over a long period, due to its resistance to coloration.

For example, when a protective film consisting of a polymer layer containing no inorganic filler and a transparent adhesive layer is used to protect an image-formed medium attached to a building floor surface, it has been found that the protective film begins to wear away after a relatively short period (for example, within a month), leading to abrasion wear of the image under the protective film and its partial or full disappearance.

The present inventor has therefore conducted much research with the purpose of obtaining an adhesive sheet having an adequate protective effect for protection of images from abrasion wear due to the abrasive forces mentioned above without losing its transparency as a whole. As a result, we have succeeded in determining that the aforementioned protective effect can be dramatically increased by using as a protective film an adhesive sheet provided with a protective layer comprising a cured resin and rigid beads dispersed in the cured resin.

Throughout the present specification, "self-adherent polymer" will refer to a polymer exhibiting tackiness at ordinary temperature (about 25°C), and that can easily impart a pressure-sensitive adhesive property to an adhesive layer containing the self-adherent polymer.

It is therefore an object of the present invention to provide an adhesive sheet which can effectively prevent abrasion wear of images on attachment surface, which can be easily attached for protection of images created on media, and which can prevent coloration of adhesive layers and effectively prevent coloration of visible images.
Fig. 1 is a cross-sectional view of an embodiment of an adhesive sheet of the invention.
Fig. 2 is a cross-sectional view of a support section (containing no adhesive layer) as an adhesive sheet precursor prepared in the examples.

The adhesive sheet of the invention is a sheet comprised of a base layer, a protective layer disposed on the front surface of the base layer and an adhesive layer disposed on the back surface of the base layer, and it is transparent with sufficient overall light transmittance. It can therefore be used to protect visible images formed on any image receptor surface such as image-formed media and the like.

The protective layer comprises, at least a top layer, which is a layer containing a cured resin and rigid beads dispersed in the cured resin. This can effectively prevent abrasion wear of images on attachment surface. Because the protective layer has a layer containing a cured resin and rigid beads in at least the top layer, the protective layer undergoes no abrasion wear within relatively short periods (for example, a month). It can therefore effectively prevent abrasion wear of images under the protective film.

The adhesive layer contains a self-adherent polymer, and can therefore be easily attached in locations where no coating equipment is available, for protection of images formed on media. The adhesive layer exhibits pressure-sensitive adhesive properties at the temperature of the adhesion operating environment. It is therefore possible to attach the adhesive sheet of the invention onto an attachment surface by pressure while it is in contact with the attachment surface. Also, depending on the need, the adhesive layer may be heated for use in the same manner as a heat-sensitive adhesive, or the adhesive sheet may be contacted with the attachment surface while heating and attached with pressure onto the attachment surface.

The adhesive layer also contains a self-adherent polymer crosslinked with a non-yellowing crosslinking agent. This can prevent coloration (yellowing) of the adhesive layer and thus effectively preventing coloration of the formed image seen through the adhesive sheet.

The non-yellowing crosslinking agent is a crosslinking agent of such a nature that the adhesive layer containing the crosslinked self-adherent polymer (i.e., the adhesive sheet as a whole including the adhesive layer) exhibits no visible coloration in a weather resistance test carried out under prescribed conditions. For example, it is preferred that no measurable coloration of the image is viewed on the adherend after a weather resistance test using a high energy ultraviolet weather meter for 3 days under conditions of a light energy of 70 mW/cm², a temperature of 53°C and a humidity of 40% RH, while the adhesive sheet is attached to the adherend. If no measurable coloration is found with this test, there will be no coloration of the image observed through the adhesive sheet even with relatively extended use (preferably two months or longer) in an outdoor environment.

The ratio of the whiteness value (Af) measured with a differential colorimeter after said weather resistance test with respect to the whiteness value (In) measured with a differential colorimeter before said weather resistance test (Af/In), where "Af" and "In" are measured under the same conditions, is preferably at least 0.7. If the ratio Af/In is at least 0.7, it is possible to more effectively prevent coloration of observed images used outdoors. The ratio Af/In is preferably at least 0.75, and more preferably at least 0.80.

The non-yellowing crosslinking agent may be selected as one that does not cause yellowing of adhesive layers from among crosslinking agents for adhesives, such as bisamide-based crosslinking agents, isocyanate-based crosslinking agents, epoxy-based crosslinking agents and chelate crosslinking agents (metal chelate compounds). Particularly useful examples of crosslinking agents include but are not limited to bisamide-based crosslinking agents, aliphatic isocyanate-based crosslinking agents (including alicyclic isocyanate-based crosslinking agents) and aliphatic epoxy-based crosslinking agents (including alicyclic epoxy compounds). The crosslinking agent may consist substantially of one or more types selected from the group consisting of these agents.

As mentioned above, the adhesive sheet of the invention as a whole is light transmitting. The whole light transmittance of the sheet as measured with light incidenting to the adhesive layer side is normally 70% or greater, preferably 80% or greater and most preferably 85% or greater. If the light transmittance is too low, there may be a risk of lower visibility of the image formed on the attachment surface for the image-formed medium. The term "light transmittance" used throughout the present specification refers to the light transmittance measured by the procedure in accordance with the "procedure for measurement of light transmittance" defined by JIS K 7105.

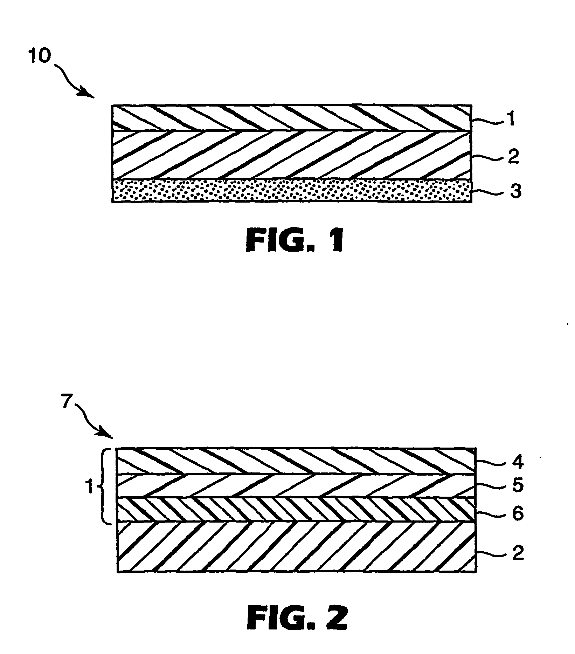

The adhesive sheet of the invention comprises a substrate wherein the substrate is a laminate comprising a support consisting of a laminate comprising a base layer and a protective layer affixed to the front surface of the base layer, and an adhesive layer on the back surface of the support (i.e. the back surface of the base layer). Fig. 1 shows a cross-sectional view of an embodiment of an adhesive sheet according to the invention. The adhesive sheet 10 is produced by laminating on one side of a base layer 2 a protective layer 1 comprising at least as its top layer a layer containing a cured resin and rigid beads dispersed in the cured resin, and then laminating an adhesive layer 3 on the opposite side of the base layer. The details for production of each layer that may be included in the adhesive sheet will be described below.

The adhesive sheet of the invention typically has a total thickness of 100-500 µm to allow easy attachment onto the surface of image-formed media on building floor and wall surface. The adhesive sheet of the invention may also have the materials and their contents of each layer appropriately determined so that the stiffness of the sheet as a whole is not weakened. If the stiffness of the sheet as a whole is weakened, application (adhesion) onto adherends may become difficult. The top layer of the protective layer must include a cured resin (hardened resin) and rigid beads, and the amount of the rigid beads is preferably as high as possible in order to increase the overall stiffness of the sheet. Nevertheless, if the amount of rigid beads is too great, the rigid beads may tend to shed (that is, peel out of the cured resin) from the cured resin. The amount of rigid beads is therefore typically 100-450 parts by weight and preferably 110-400 parts by weight to 100 parts by weight of the cured resin (non-volatile content). The cured resin referred to throughout this specification means a "curable resin" that has been cured. As will be explained below, when a "curing component" such as a curing agent is necessary, the cured resin will refer to the resin obtained by curing a mixture consisting of the curable resin and the curing component.

The adhesive sheet of the invention with the construction described above can also have a scratch resistance of a level sufficiently suited for the purpose of protecting images on image-formed media (for example, 2H or greater with evaluation by a pencil hardness test in accordance with JIS K 5400).

The protective layer itself preferably has sufficient transparency to allow images to be satisfactorily visible on attachment surface. In such cases, the rigid beads are preferably transparent beads, such as inorganic oxide beads, glass beads, ceramic beads, glass ceramic beads or the like. From this standpoint, the beads are preferably of high transparency with as large a diameter as possible. The diameter of the beads will typically be 5-100 µm, and preferably 10-50 µm. In most cases, the diameter of the beads can be measured with image processing equipment using an optical microscope.

The adhesive sheet of the invention has a surface layer comprising a cured resin and rigid beads dispersed in the cured resin, and therefore hides irregularities on attachment surface even when its thickness is relatively low. Consequently, even when attached to the surface of image-formed media that is affixed to floors or walls with irregularities of relatively large dimensions, it is possible to enhance the smoothness of the adhesive sheet surface after attachment. It is also possible to impart an adequate protective effect, i.e. adequate abrasion resistance and scratch resistance, to walls and floors by attachment (covering) with the adhesive sheet. The thickness of the support (i.e. the laminate comprising the base layer and the protective layer) is in the range of preferably 80-480 µm, and more preferably 90-400 µm. If the thickness of the support is too small, it may not be possible to enhance the smoothness of the sheet surface after attachment, or it may not be possible to impart sufficient strength to the attachment surface. Conversely, if it is too large the bulk is increased, and this may impair the appearance of the surrounding area including the site of attachment.

The adhesive sheet of the invention can be produced by providing a substrate comprising a base layer and a protective layer fixed on the front surface of the base layer, and disposing an adhesive layer on the back surface of the base layer. The adhesive layer can be formed from a coating film comprising a self-adherent polymer and a crosslinking agent crosslinking the self-adherent polymer, in the same manner as in the case of a conventional adhesive sheet. On the adhesive surface of the adhesive layer, fine irregularities are formed by transferring from a release sheet (liner) with fine irregularities on its surface, thereby making it possible to control the adhesive strength on the attachment surface and to improve escape of bubbles at the time of application. Such fine irregularities disappear due to plastic deformation of the adhesive layer after final attachment, so that visibility of the observable image is not impaired.

A single layer consisting of only a surface layer may be used as the protective layer, but the protective layer preferably comprises (a) a surface layer containing a cured resin and rigid beads dispersed in the cured resin, and (b) a primer layer disposed between the surface layer and the base layer. Because the base layer to which the protective layer is affixed is usually a resin layer, and the primer layer can be affixed to the base layer with a high fixing strength (adhesive strength), thereby making it possible to effectively enhance the durability and abrasion resistance of the adhesive sheet.

The protective layer is preferably provided as a protective film as described below, and laminated with a separately provided base layer to form the adhesive sheet. Specifically, the protective film is a film-like protective layer comprising (a) a surface layer containing a cured resin and rigid beads dispersed in the cured resin, and (b) a primer layer disposed between the surface layer and the base layer. This allows the protective film to be affixed to the base layer with a high fixing strength, thereby facilitating production of an adhesive sheet according to the invention. A cured resin layer separate from the surface layer may also be disposed between the surface layer and primer layer in order to increase the cohesion between them. The thickness of such a cured resin layer will normally be 1-50 µm. In order to control the total thickness of the adhesive sheet within an optimum range, the total thickness of the protective layer (film-like protective layer) is preferably 50-150 µm, and most preferably 60-120 µm. The light transmittance of the protective layer as a whole is usually 75% or greater, preferably 80% or greater and more preferably 90% or greater. If the light transmittance of the protective layer is too low, the image on the attachment surface may not be satisfactorily visible. Thus, the light transmittance of the protective layer is most preferably 90% or greater.

The support section of the adhesive sheet of the invention is preferably produced in the following manner. That is, the support section of the adhesive sheet may be produced by the method comprising the following steps (1) to (3):
(1) providing, as the protective layer, a film-like protective layer comprising (a) a surface layer containing a curable resin and rigid beads dispersed in the curable resin, and (b) a primer layer disposed between the surface layer and the base layer,
(2) curing the curable resin of the film-like protective layer, and
(3) affixing the film-like protective layer on the front surface of the base layer via the primer layer.

An adhesive sheet according to the invention can then be completed by laminating an adhesive layer on the support section produced in this manner. This method facilitates production of an adhesive sheet having the excellent performance described above.

In most cases it will be most efficient (the curing time can be shortened) if the curable resin is cured using heat or radiation (e.g. ultraviolet light or an electron beam). When heat is used to cure the curable resin, heating from 120-200°C for 1-20 minutes will sometimes be necessary. Even with irradiation of ultraviolet rays or an electron beam, the protective layer may undergo exposure to an equivalent or greater amount of heat. Thus, curing of the protective layer before it is laminated on the base layer will allow production of the adhesive sheet without exposing the base layer to such high temperature for a long time (from a few to a few dozen minutes).

In cases where shortening of the curing time is not required during the production process, a resin capable of curing at a relatively low temperature (a temperature of not higher than 100°C), such as a moisture-curable resin or cold-curable resin, may also be used.

The thickness of the surface layer of the film-like protective layer is not particularly limited so long as the effect of the invention is not adversely affected, but it is usually 10-150 µm, and preferably 20-120 µm. If the thickness of the surface layer is too small, the durability against frictional contact and the abrasion resistance may be reduced, whereas if it is too large, the pliability of the sheet as a whole may be reduced, thus rendering the attachment operation more difficult.

On the other hand, the thickness of the primer layer, while not particularly limited, is usually 10-100 µm and preferably 20-80 µm. If the thickness of the primer layer is too small, adhesion between the surface layer and base layer may be lowered, thus reducing the durability against frictional contact and the abrasion resistance, whereas if it is too large, it may become difficult to control the thickness of the sheet as a whole to the prescribed thickness while also forming the surface layer in an adequate thickness.

The surface layer may contain surface modifiers or curing components such as curing agents, crosslinking agents, curing accelerators, polymerization initiators, and catalysts, in addition to the above essential components such as the curable resin. It may also contain other additives such as surfactants, fillers, flame retardants, ultraviolet absorbers, oxidation stabilizers, tackifying resins, colorants, and antimicrobial agents. The content of such additional additives is preferably not more than 20 parts by weight with respect to 100 parts by weight of the curable resin.

The surface layer may be made by forming a slurry containing the essential components such as beads and a curable resin, coating the slurry, and solidifying it. A slurry with satisfactory coating properties can be obtained by prior adjustment of the nonvolatile content in a solution of the curable resin within a range from 20 to 40 wt% when mixing the respective components of the slurry. Since the slurry obtained in this manner contains beads, the slurry is preferably coated by using a notch bar or a round bar.

The cured resin is obtained by curing the curable resin. The curable resin used for the invention is not particularly restricted so long as it gives a cured resin with excellent transparency and abrasion resistance after curing. The light transmittance of the cured resin (cured curable resin) is usually 80% or greater, preferably 85% or greater and most preferably 95% or greater. Examples thereof include urethane resins, acrylic resins, polyester resins, silicone resins and epoxy resins. Urethane resins are preferred, because urethane resins have satisfactory adhesion with rigid beads (described in detail below) and comparatively strong toughness, thus allowing effective enhancement of the abrasion resistance of the surface layer. Specific examples of these resins include the urethane resin manufactured by Nippon Polyurethane Co., Ltd. under the trade name of "SH-1011". The cured resin is preferably produced with addition of a curing agent (for example, trade name of "COLONATE HX" by Nippon Polyurethane Co., Ltd.) to the resin.

In cases where a curing component (such as the aforementioned curing agent) is required, the content of the curing component is usually not more than 50 parts by weight, preferably not more than 30 parts by weight, and most preferably not more than 20 parts by weight, with respect to 100 parts by weight of the curable resin.

As described above, inorganic oxide beads and the like can be used as the rigid beads. The Vicker's hardness of the rigid beads is preferably no less than 500 kg/mm². When the hardness is lower than 500 kg/mm², the durability against frictional contact and the abrasion resistance may be lowered. Here, "Vicker's hardness" is the hardness value measured by a microhardness tester on the exposed surface of beads of a cylindrical sample with a diameter of about 3 cm and a height of about 1 cm, which is made by mixing about ten to twenty rigid beads with a particle size of about 1 mm with 10 g of an epoxy resin, hardening it and then polishing the surface thereof. For the measurement, the measuring load is 300 g and the loading time is 15 seconds.

The rigid beads are preferably inorganic oxide beads. Inorganic oxide beads can provide particularly excellent abrasion resistance and durability against frictional contact because of their high binding action (affinity) with the resin of the protective layer. The inorganic oxide beads preferably contain alumina, silica, titania, zirconia, or the like. Alumina-containing beads are particularly preferred. The inorganic oxide beads are preferably subjected to surface treatment with a silane coupling agent so as to improve the cohesion with the resin.

A specific example of rigid beads is the alumina bead product manufactured by Showa Denko Co., Ltd. under the trade name of "CB A40".

The refractive index of the rigid beads is preferably approximately the same as that of the cured resin so as to enhance the transparency of the surface layer. Accordingly, the refractive index of the rigid beads is preferably within a range of 1.3-1.9.

The protective layer preferably contains a primer layer in order to facilitate lamination with high fixing strength between the base layer and protective layer. The primer layer is usually a thermal adhesive layer containing a thermoplastic resin with high transparency. The light transmittance of the thermoplastic resin is usually at least 70%, preferably at least 80%, and most preferably at least 90%. As thermoplastic resins there may be used, for example, vinyl chloride resins (including copolymers of vinyl chloride and other vinyl monomers), urethane resins, acrylic resins, polyester resins, and silicone resins (including silicone-polyurea resins).

So long as the effect of the present invention is not adversely affected, additives such as curing agents, crosslinking agents, polymerization initiators, catalysts, surfactants, fillers, flame retardants, ultraviolet absorbers, oxidation stabilizers, tackifying resins, and colorants can be included in the primer layer. The primer layer can also be made by forming a coated film from a coating solution containing a primer layer resin using common coating means.

The base layer is required as part of the support of the adhesive sheet, in order to satisfactorily maintain the mechanical strength of the sheet as a whole.

The base layer may be formed from any base material commonly used for highly transparent adhesive sheets, and for example, a resin film may be used. As resins for resin films there may be used vinyl chloride resins (including copolymers of vinyl chloride and other vinyl monomers), polyolefin resins, urethane resins, acrylic resins, polyester resins and silicone resins (including silicone-polyurea resins).

The thickness of the base layer is usually 10-80 µm, and preferably 15-50 µm. The light transmittance of the base layer is usually at least 80%, preferably at least 85% and more preferably at least 95%.

So long as the effect of the present invention is not adversely affected, additives such as curing agents, crosslinking agents, polymerization initiators, catalysts, surfactants, fillers, flame retardants, ultraviolet absorbers, oxidation stabilizers, tackifying resins and colorants may be included in the base layer.

The base layer may be formed, for example, by creating a film by extrusion of a starting material containing the resin. Alternatively, a coating solution containing the resin may be coated and hardened on a processing substrate. The base layer formed in this manner may usually be dry-laminated on the separately provided protective layer or adhesive layer to produce the adhesive sheet of the invention.

As explained above, even in cases of relatively light coloration of the adhesive layer itself when used in an adhesive sheet comprising a rigid bead-containing protective layer as the protective layer, the image under the adhesive sheet sometimes undergoes visible coloration. While the reason for this is not fully understood, the major cause is thought to be optical phenomena, as will be explained below.

The protective layer contains a plurality of rigid beads dispersed in the cured resin. A plurality of optical interfaces are therefore formed between the cured resin and the rigid beads. The light passing through the optical interfaces is refracted and scattered. Specifically, visible light reflected at the image on the attachment surface passes through the adhesive layer and is then refracted and scattered at the optical interfaces within the protective layer. However, the effect of such refraction and scattering is less on light having relatively long wavelengths than on light having relatively short wavelengths. Consequently, although the visible light reflected at the image as viewed from the protective layer surface passes through the protective layer in all of the wavelength regions, it is thought that the long wavelength light which is relatively unaffected by the aforementioned refraction and scattering becomes more strongly visible. Thus, reflected light from the image is shifted toward the long wavelength end, causing the image to have visible coloration. This is similar to the principle of the sun appearing red during sunrise or sunset as the sunlight passes through the thicker layer of air. Thus, coloration due to yellowing of the adhesive layer becomes visible as coloration of the adhesive sheet as a whole, resulting in observable coloration of the image on the attachment surface. It is therefore important that the adhesive layer does not exhibit coloration after its use for a long period.

According to the present invention, the adhesive layer contains a crosslinked self-adherent polymer, and the self-adherent polymer is crosslinked with a non-yellowing crosslinking agent in order to prevent coloration of the adhesive layer. The self-adherent polymer before crosslinking has a functional group in its molecule that can react with the crosslinking agent (a carboxyl group, hydroxyl group, epoxy group, etc.) for the crosslinking reaction. As mentioned above, the crosslinking agent is selected from bisamide-based crosslinking agents, aliphatic isocyanate-based crosslinking agents (including alicyclic isocyanate-based crosslinking agents) and aliphatic epoxy-based crosslinking agents (including alicyclic epoxy-based crosslinking agents).

As aliphatic isocyanate-based crosslinking agents there are particularly preferred oligomers containing in their molecules reaction residues of aliphatic diisocyanates such as isophorone diisocyanate and hydrogenated MDI (hydrogenated diphenylmethane diisocyanate). As aliphatic epoxy-based crosslinking agents there are preferred polyglycidyl ether monomers of polyhydric alcohols, such as alkyleneglycol diglycidyl ethers and alkanetriol triglycidyl ethers, or oligomers containing these reaction residues in their molecules.

Most preferred among non-yellowing crosslinking agents are bisamide-based crosslinking agents. Bisamide-based crosslinking agents are especially preferred because they can react at relatively low temperatures with self-adherent polymers having carboxyl groups, and can easily produce a crosslinking density which is sufficient for increased holding power. Bisaziridine derivatives of dibasic acids such as isophthaloyl bis(2-methylaziridine) and the like are particularly preferred for use as bisamide-based crosslinking agents.

The proportion of the crosslinking agent will normally be in the range of 0.1-5 parts by weight, and preferably 0.15-3 parts by weight, with respect to 100 parts by weight of the self-adherent polymer.

According to the invention, acrylic-based polymers, polyurethanes, polyolefins, diene-based polymers and the like may be used as self-adherent polymers.

An example of synthesis of a self-adherent polymer will now be explained, for an acrylic-based polymer. First, an acrylic unsaturated acid (for example, acrylic acid, methacrylic acid, itaconic acid, maleic acid, etc.) is provided as a first monomer. This first monomer is combined with an acrylic monomer as a second monomer, to prepare a monomer mixture. The second monomer may be an alkyl acrylate such as isooctyl acrylate, butyl acrylate, 2-ethylhexyl acrylate or isononyl acrylate. The ratio of the first monomer to the second monomer (by weight) in the monomer mixture is in the range of preferably 1:99 to 25:75, and more preferably 3:97 to 20:80. Another copolymerizable monomer may also be added to the first and second monomers when preparing the monomer mixture. As additional copolymerizable monomers there may be used methyl (meth)acrylate, 2-hydroxyethyl (meth)acrylate, hydroxy-3 phenoxypropyl acrylate, phenoxyethyl acrylate, phenoxypropyl acrylate, and the like.

The monomer mixture prepared in this manner is subjected to a common polymerization method such as solution polymerization, emulsion polymerization or bulk polymerization to synthesize a self-adherent polymer with the prescribed molecular weight. The molecular weight of the self-adherent polymer may be in a range in which the desired adhesion is exhibited, and will normally be in the range of 10,000 to 1,000,000 in terms of weight-average molecular weight.

The adhesive layer may also contain components other than the self-adherent polymer crosslinked with a crosslinking agent, so long as the effect of the invention (especially the anti-yellowing effect) is not impaired. For example, including glass microspheres in the adhesive layer can effectively enhance the ability of the adhesive surface of the adhesive sheet to slide when placed over the adherend, i.e. the "slidability" (ease of slide), before the adhesive sheet is fully attached, thereby allowing easier positioning.

Polymers other than the self-adherent polymer, such as crystalline polymers (usually non-adhesive at ordinary temperature, or approximately 25°C) may also be added. Crystalline polymers can impart slidability and heat strippability (the property of exhibiting lower peel strength when heated) to the adhesive layer. As crystalline polymers there may be used, for example, polyesters such as polycaprolactone, or polyurethanes obtained by chain extension of a polyester with a non-yellowing isocyanate compound (for example, isophorone diisocyanate).

The adhesive layer is formed, for example, by coating a coating solution containing the self-adherent polymer and crosslinking agent onto a liner, and solidifying it. The coating means used may be a common coating means such as a knife coater, roll coater, die coater, bar coater or curtain coater. The adhesive layer formed in this manner may be further provided with a liner to prepare a liner-attached adhesive layer, which is then dry-laminated on the back surface of the base layer to complete the adhesive sheet.

The light transmittance of the adhesive layer is usually 80% or greater, preferably 85% or greater and most preferably 95% or greater. The thickness of the adhesive layer is usually 10-80 µm and preferably 15-50 µm. If the thickness of the adhesive layer is too small, the adhesion performance including the holding power may be lowered. No particular problem will be posed if it is too large, but the image may exhibit visible coloration when the adhesive layer undergoes coloration due to causes other than the crosslinking agent.

A surface modifier may be included in at least the surface layer of the protective layer in order to increase the contamination resistance of the protective layer. Such a surface modifier will usually be a silicone-based or fluorine-based surface modifier.

A plurality of fine irregularities derived from the rigid beads are formed on the surface of the surface layer. Thus, in cases where dust, etc. has adhered to the surface, an area of contact between the dust and surface of the surface layer becomes larger than when dust adheres onto a smooth surface. In this case, the surface tension is preferably reduced by modifying the surface of the surface layer so as to allow dust contamination to be simply wiped off using a cleaning apparatus, without excessively strong polishing.

As the means for reducing the surface tension of the surface of the surface layer, the surface modifier for coating compositions disclosed in Japanese Unexamined Patent Publication (Kokai) No. 6-240201 may be included in the surface layer of the protective layer. Such a surface modifier is preferably a nonionic one. This will allow the surface modifier to easily bleed from the interior of the surface layer to the surface so that the surface can be constantly maintained as a fluorine surface. The fluorine surface modifier is preferably an oligomer compound, and preferably in the form of liquid at ordinary temperature (about 25°C). The viscosity (at about 25°C) is usually below 50 cps, and is most preferably within a range of 1-30 cps. When the viscosity is too high, bleeding from the interior of the surface layer to the surface may be hampered, whereas when the viscosity is too low, the durability of the surface modifying effect may be lowered.

The content of the surface modifier is usually 0.1-10 parts by weight, preferably 0.5-5 parts by weight and more preferably 1-3 parts by weight, with respect to 100 parts by weight of the cured resin (nonvolatile content, including the curing components). When the content is too low, the durability of the surface modifying effect may be lowered, while a content larger than necessary will not notably improve the contamination resistance effect, but rather, may have a deleterious influence (such as producing coating defects during formation of the surface layer, for example).

As the above-mentioned surface modifier there may be used, for example, a fluorine compound having the following chemical structure. That is, it may be a surfactant having a perfluoroalkyl group wherein all hydrogen atoms of the alkyl groups in the molecule are replaced with fluorine atoms, and a hydrophilic group (for example, hydroxyl group) or lipophilic group. Such compounds are used for surface modification of surface layers utilizing the surface migration property of the perfluoroalkyl group, and the compound added in a small amount migrates to the layer surface, thereby making it possible to modify the surface. Specific examples include the fluorine surface modifiers of the DEFENSA^{™} series, manufactured by Dainippon Ink Chemical Industries Co., Ltd. under the trade names of "MCF-300", "MCF-310", "MCF-312" and "MCF-323".

So long as the effect of the present invention is not adversely affected, an antimicrobial agent may be included as an additional additive in the protective layer. For example, bacteria or mold spores often adhere to dust which attaches to the surface of the surface layer, and therefore adhesion of dust results in mold contamination. Mold will sometimes remain even if the dust is wiped off. An antimicrobial agent is preferably added to at least the surface layer to impart an anti-contamination effect against mold.

The content of the antimicrobial agent is usually 0.01-2 parts by weight, and preferably 0.05-1 part by weight, with respect to 100 parts by weight of the cured resin (nonvolatile content). When the content is too small the durability of the effect may be lowered, while a content larger than necessary will not provide any notable improvement, but rather, may have a deleterious influence (such as producing coating defects during formation of the surface layer, for example). The antimicrobial agent used may be, for example, strictly an "antibacterial agent" for sterilization or inhibition of bacterial growth, or strictly a "fungicide" for sterilization or growth inhibition of mold.

### Examples

### Examples 1 and 2, Comparative Examples 1 and 2

First, a film-like protective layer for use as a protective layer in the respective examples was formed in the following manner.
1. A release-treated sheet was coated with a coating solution containing a vinyl chloride (PVC) resin to form a thermally laminatable primer layer (thickness: 50 µm) on the base layer.
2. The primer layer was coated with a composition prepared by mixing components according to the first layer formulation shown in Table 1, and then dried at 90°C for 2 minutes, to form the first layer of the protective layer as a thermosetting resin layer with a thickness of 15 µm.
3. Next, the first layer was coated with a composition prepared by mixing components according to the second layer formulation shown in Table 1 to form a second layer as the surface layer of the protective layer. This formed an uncured film-like protective layer consisting of the three layers: primer layer/first layer/surface layer. The laminate was heated at 100°C for one minute and then at 160°C for 4 minutes and 30 seconds for drying and curing treatment to produce a film-like protective layer. The total thickness of the first layer and the surface layer (second layer) of the protective layer was 40 µm.

The film-like protective layers used for the examples were all obtained in this manner.

**Table 1**

| | | Ex. 1 | Ex. 2 | Comp. Ex. 1 | Comp. Ex. 2 |
|---|---|---|---|---|---|
| First layer formulation | SH-1011 | 100 | 100 | 100 | 100 |
| | COLONATE HX | 5 | 5 | 5 | 5 |
| Second layer formulation | SH-1011 | 100 | 100 | 100 | 100 |
| | COLONATE HX | 5 | 5 | 5 | 5 |
| | GB731A (glass beads) | - | 35 | - | - |
| | CB A40 (alumina beads) | 35 | - | 35 | - |
| | Antimicrobial agent | 0.4 | 0.4 | 0.4 | 0.4 |
| | Fluorine-based surface modifier | 2.4 | 2.4 | 2.4 | 2.4 |

| | | | | | |
|---|---|---|---|---|---|
| Note: The proportions in the table are based on weight. | | | | | |

In the above table, "SH-1011" (trade name) denotes an aliphatic polyurethane resin coating composition manufactured by Nippon Polyurethane Industry Co., Ltd., with a solid content (nonvolatile content) of 30 wt%. "COLONATE HX" (trade name) denotes an aliphatic isocyanate curing agent manufactured by Nippon Polyurethane Industry Co., Ltd., with a solid content (nonvolatile content) of 100 wt%. "GB731A" (trade name) denotes glass beads with a mean particle size of 30 µm and a Vicker's hardness of 600 kg/mm² manufactured by Toshiba Ballotini Co., Ltd., and "CB A40" (trade name) denotes alumina beads with a mean particle size of 40 µm and a Vicker's hardness of 2500 kg/mm² manufactured by Matsushita Denko Co., Ltd. The antimicrobial agent was "AMENITOP" (trade name) manufactured by Matsushita Denko Co., Ltd., and the fluorine-based surface modifier used in each of the examples was "DEFENSA Series, MCF-312" (trade name) manufactured by Dainippon Ink Chemical Industries Co., Ltd.

The release-treated sheet was peeled off from the film-like protective layer obtained in the manner described above, and as shown in Fig. 2, a bead-containing cured resin layer 4 and a film-like protective layer 1 consisting of a cured resin layer 5 and a primer layer 6 were heat laminated into the surface of a transparent base layer 2 having a thickness of 80 µm (vinyl chloride resin film manufactured by Bando Chemical Co., Ltd., light transmittance = 97%), to obtain a support section 7 (adhesive sheet precursor excluding the adhesive layer).

Separately, a coating solution obtained by mixing an acrylic-based adhesive polymer (Allocet 8167^{™}, manufactured by Nihon Shokubai Co., Ltd.) with a crosslinking agent was coated onto a release sheet to a dry thickness of 40 µm, and this was then dried and crosslinked to form an adhesive layer (with release sheet). The weight ratio (nonvolatile content) of the acrylic-based adhesive polymer and the crosslinking agent was 100:0.5.

The adhesive layer prepared in this manner was laminated with the adhesive sheet precursor obtained in the manner described earlier, to complete an adhesive sheet for each example.

Example 1 is a particularly preferred example of the invention using alumina beads as the rigid beads. It also employs isophthaloyl bis(2-methylaziridine), the non-yellowing crosslinking agent as a crosslinking agent. The light transmittance of the film-like protective layer was 93%. The light transmittance of the adhesive layer as a whole was 97%, and the light transmittance of the adhesive sheet as a whole was 87%.

Example 2 is a particularly preferred example of the invention using glass beads as the rigid beads. The crosslinking agent and its amount were the same as Example 1. The light transmittance of the film-like protective layer was 93%, and the light transmittance of the adhesive sheet as a whole was 87%.

For comparison, Comparative Example 1 is an example using a crosslinking agent (aromatic isocyanate-based crosslinking agent) which is not a non-yellowing crosslinking agent. The light transmittance of the adhesive layer as a whole was 97%, and the light transmittance of the adhesive sheet as a whole was 87%.

Comparative Example 2 is an example using no rigid beads. The crosslinking agent and its amount was the same as Example 1. The light transmittance of the adhesive sheet as a whole was 88%.

The performance tests for the adhesive sheets of each of the examples will now be explained.

### (Test methods)

### 1) Abrasion resistance test:

An image-formed medium was attached to the surface of an aluminum plate, and the adhesive sheet of each example was attached to the image side of the medium to prepare a sample. Each sample was subjected to a test with S-42 polishing paper under a load of 1 kg, using a Taber abrasion tester, and the number of rotations required to completely erase the image was measured.

### 2) Weather resistance test:

A sample prepared in the same manner as 1) above was aged for 3 days under conditions with a light energy of 70 mW/cm², a temperature of 53°C and a humidity of 40% RH, using a high-energy ultraviolet weather meter (Metalweather^{™}) manufactured by DAIPLA WINTES CO., Ltd. After aging, the image was observed through the adhesive sheet from the protective layer surface and the visibility of the image after aging was compared with that of image before aging.

### 3) Coloration test:

The ratio of the whiteness value Af measured with a differential colorimeter after the weather resistance test (aging for 3 days) described in 2) above with respect to the whiteness value In measured with a differential colorimeter before the weather resistance test under the same conditions (Af/In) was determined for a sample prepared in the same manner as 1) above.

### 4) Scratch resistance test:

A sample prepared in the same manner as 1) above was subjected to a pencil hardness test by measurement according to JIS K 5400.

### 5) Contamination resistance test:

Each adhesive sheet was attached directly to a floor and left to stand for one week, after which the surface was washed and the condition of contamination was visually observed.

The results for the abrasion resistance test and scratch resistance test are shown in Table 2 below.

**Table 2**

| | Example 1 | Example 2 | Comp. Ex. 1 | Comp. Ex. 2 |
|---|---|---|---|---|
| Abrasion resistance | 1800 | 1100 | 1800 | 950 |
| Scratch resistance | 4H | 3H | 4H | H |

Table 2 shows that the adhesive sheets of the invention had improved abrasion resistance and scratch resistance due to the presence of the rigid beads.

The results of the weather resistance test revealed no coloration for Examples 1 and 2, but Comparative Example 1 had visible yellowing of the image. Even after one week of aging, no coloration was visible in the adhesive sheets of Example 1, Example 2 or Comparative Example 2.

As a result of the coloration test, the Af/In value for the examples were as follows: Example 1, 0.83; Example 2,0.84; Comparative Example 1, 0.62; Comparative Example 2, 0.83. The whiteness values were calculated using the formula L* x 0.01 x (L* - 5.7 x b*), based on the lightness (L*) and the chromaticity in the yellow-blue direction (b*) as measured according to ASTM E313.

The results of the contamination resistance test showed that all of the adhesive sheets maintained the same level of cleanliness compared to the sheets before testing, and thus had excellent contamination resistance. When no surface modifier was included in the surface layer, there was a notable difference in the contamination compared to the sheet before testing, with dirt adhering to a degree that was not washable with water alone.

As explained above, the present invention can provide an adhesive sheet that can effectively prevent abrasion wear of images on attachment surfaces, that can be easily attached in locations where no coating equipment is available for protection of images formed on media, and that can prevent coloration of adhesive layers while also effectively preventing coloration of visible images.

## Claims

1. A transparent adhesive sheet for protection of an adherend having images, the adhesive sheet comprising a base layer, a protective layer disposed on the front surface of the base layer and an adhesive layer disposed on the back surface of the base layer, wherein the protective layer comprises, at least as its top layer, a layer containing a cured resin and rigid beads dispersed in the cured resin, and the adhesive layer contains a self-adherent polymer crosslinked with a non-yellowing crosslinking agent.

2. A transparent adhesive sheet according to claim 1, which, when adhered to the adherend, exhibits no measurable coloration of the image observed after a weather resistance test using a high energy ultraviolet weather meter for 3 days under conditions of a light energy of 70 mW/cm², a temperature of 53°C and a humidity of 40% RH.

3. A transparent adhesive sheet according to claim 2, wherein the ratio of the whiteness value Af measured with a differential colorimeter after the weather resistance test with respect to the whiteness value In measured with a differential colorimeter before the weather resistance test (Af/In) is at least 0.7, where the Af and In are measured under the same conditions.

4. A transparent adhesive sheet according to claim 1, wherein the non-yellowing crosslinking agent consists substantially of one or more agent selected from the group consisting of bisamide-based crosslinking agents, aliphatic isocyanate-based crosslinking agents and aliphatic epoxy-based crosslinking agents.

5. A transparent adhesive sheet according to claim 1, wherein the protective layer further comprises a primer layer disposed between the surface layer of the protective layer and the base layer.

6. A transparent adhesive sheet according to claim 5, which further comprises a layer composed of a cured resin disposed between the primer layer and the surface layer of the protective layer.

7. A transparent adhesive sheet according to claim 1, wherein the surface layer further comprises a fluorine-based surface modifier.

8. A transparent adhesive sheet according to claim 1, wherein the self-adherent polymer is an acrylic-based polymer, and the non-yellowing crosslinking agent is a bisamide-based crosslinking agent.

## Patentansprüche

1. Transparentes flächenförmiges Klebegebilde zum Schutz eines Adhärenten mit Bildern, wobei das flächenförmige Klebegebilde eine Grundschicht, eine Schutzschicht, die auf der vorderen Oberfläche der Grundschicht angeordnet ist, und eine Klebeschicht, die auf der rückwärtigen Oberfläche der Grundschicht angeordnet ist, umfasst, wobei die Schutzschicht mindestens als deren obere Schicht eine Schicht umfasst, die ein gehärtetes Harz und starre Körnchen enthält, die in dem gehärteten Harz dispergiert sind, und die Klebeschicht ein selbstklebendes Polymer enthält, das mit einem nichtvergilbenden Vernetzungsmittel vernetzt ist.

2. Transparentes flächenförmiges Klebegebilde nach Anspruch 1, das, wenn es an dem Adhärenten haftet, keine messbare Verfärbung des Bilds aufweist, die nach einem Bewitterungsbeständigkeitstest unter Verwendung eines Hochenergie-Ultraviolettbewitterungsmessgeräts für 3 Tage unter Bedingungen einer Lichtenergie von 70 mW/cm², einer Temperatur von 53 °C und einer Feuchtigkeit von 40 % RF beobachtet wird.

3. Transparentes flächenförmiges Klebegebilde nach Anspruch 2, wobei das Verhältnis des Weißtonwerts Af, gemessen mit einem Differentialkalorimeter nach dem Bewitterungsbeständigkeitstest, in Bezug auf den Weißtonwert In, gemessen mit einem Differentialkalorimeter vor dem Bewitterungsbeständigkeitstest, (Af/In) mindestens 0,7 beträgt, wobei Af und In unter denselben Bedingungen gemessen werden.

4. Transparentes flächenförmiges Klebegebilde nach Anspruch 1, wobei das nichtvergilbende Vernetzungsmittel im Wesentlichen aus einem oder mehr Mitteln besteht, ausgewählt aus der Gruppe bestehend aus Vernetzungsmitteln auf der Basis von Bisamid, Vernetzungsmitteln auf der Basis von aliphatischem Isocyanat und Vernetzungsmitteln auf der Basis von aliphatischem Epoxid.

5. Transparentes flächenförmiges Klebegebilde nach Anspruch 1, wobei die Schutzschicht des Weiteren eine Grundierschicht umfasst, die zwischen der Oberflächenschicht der Schutzschicht und der Grundschicht angeordnet ist.

6. Transparentes flächenförmiges Klebegebilde nach Anspruch 5, das des Weiteren eine Schicht umfasst, die sich aus einem gehärteten Harz zusammensetzt und zwischen der Grundierschicht und der Oberflächenschicht der Schutzschicht angeordnet ist.

7. Transparentes flächenförmiges Klebegebilde nach Anspruch 1, wobei die Oberflächenschicht des Weiteren ein Oberflächenmodifiziermittel auf Fluorbasis umfasst.

8. Transparentes flächenförmiges Klebegebilde nach Anspruch 1, wobei das selbstklebende Polymer ein Polymer auf Acrylbasis und das nichtvergilbende Vernetzungsmittel ein Vernetzungsmittel auf der Basis von Bisamid ist.

## Revendications

1. Feuille adhésive transparente destinée à protéger un adhérent portant des images, la feuille adhésive comprenant une couche de base, une couche protectrice placée sur la surface avant de la couche de base et une couche adhésive placée sur la surface arrière de la couche de base, dans laquelle la couche protectrice comprend, au moins en tant que couche supérieure, une couche contenant une résine durcie et des perles rigides dispersées dans la résine durcie, et la couche adhésive contient un polymère auto-adhérent réticulé avec un agent de réticulation qui ne donne pas de coloration jaune.

2. Feuille adhésive transparente selon la revendication 1, qui, lorsqu'elle est collée au adhérent, ne présente aucune coloration mesurable de l'image observée après un essai de résistance aux agents climatiques réalisé au moyen d'un Weatherometer à ultraviolets haute énergie pendant 3 jours dans des conditions d'une énergie lumineuse de 70 mW/cm², d'une température de 53°C et d'une humidité de 40% HR.

3. Feuille adhésive transparente selon la revendication 2, dans laquelle le rapport entre le degré de blancheur Af mesuré avec un colorimètre différentiel après l'essai de résistance aux agents climatiques et le degré de blancheur In mesuré avec un colorimètre différentiel avant l'essai de résistance aux agents climatiques (Af/In) est d'au moins 0,7, Af et In étant mesurés dans les mêmes conditions.

4. Feuille adhésive transparente selon la revendication 1, dans laquelle l'agent de réticulation qui ne donne pas de coloration jaune se compose essentiellement d'un ou plusieurs agents choisis dans le groupe constitué par les agents de réticulation à base de bisamide, les agents de réticulation aliphatiques à base d'isocyanate et les agents de réticulation aliphatiques à base d'époxy.

5. Feuille adhésive transparente selon la revendication 1, dans laquelle la couche protectrice comprend en outre une couche de primaire placée entre la couche superficielle de la couche protectrice et 1a couche de base.

6. Feuille adhésive transparente selon la revendication 5, qui comprend en outre une couche composée d'une résine durcie placée entre la couche de primaire et la couche superficielle de la couche protectrice.

7. Feuille adhésive transparente selon la revendication 1, dans laquelle la couche superficielle comprend en outre un agent de modification de la surface à base de fluor.

8. Feuille adhésive transparente selon la revendication 1, dans laquelle le polymère auto-adhérent est un polymère à base d'acrylique, et l'agent de réticulation qui ne donne pas de coloration jaune est un agent de réticulation à base de bisamide.
